# FASCICULE DE BREVET EUROPEEN

(11) **EP 3 849 851 B1**
(45) Date de publication et mention de la délivrance du brevet: **24.04.2024**
(21) Numéro de dépôt: 19770008.1
(22) Date de dépôt: 11.09.2019
(51) Int. Cl.: B60R 21/38

(54) **DISPOSITIF DE SECURITE DE VEHICULE POUR APPORTER UNE PROTECTION PIETON**
SICHERHEITSVORRICHTUNG EINES KRAFTFAHRZEUGS ZUR BEREITSTELLUNG VON FUSSGÄNGERSCHUTZ
VEHICLE SAFETY DEVICE FOR PROVIDING PEDESTRIAN PROTECTION

(30) Priorité: 14.09.2018 FR 1858268
(43) Date de publication de la demande: 21.07.2021
(73) Titulaire: Autoliv Development AB, 447 83 Vårgårda (SE)
(72) Inventeur: RYDSMO, Erik, 46695 Sollebrunn (SE)
(74) Mandataire: Poindron, Cyrille
(86) Numéro de dépôt international: PCT/EP2019/074216
(87) Numéro de publication internationale: WO 2020/053269

(56) Documents cités:
- GB-A- 2 395 693
- JP-A- 2000 033 850
- US-A1- 2015 183 693
- US-A1- 2018 043 855

## Description

La présente invention concerne de manière générale un dispositif de sécurité automobile employé pour apporter une protection piéton. Typiquement, un tel dispositif de sécurité comporte un organe de poussée ou de levage utilisé pour déplacer rapidement un capot du véhicule en cas de choc avec un piéton, pour éloigner significativement le capot des organes du moteur. Ainsi, le capot peut se déformer au contact du piéton sans entrer immédiatement en contact avec les organes du moteur, ce qui provoquerait une décélération brutale pour le piéton.

Le document JP2000033850 divulgue un organe de poussée ou de levage d'un dispositif de sécurité automobile pour apporter une protection piéton, avec un piston qui est emboîté élastiquement sur un corps fixe pour retenir le piston sur le boitier avant une mise à feu du dispositif. Un tel assemblage peut présenter un risque de détachement intempestif, et nécessite des tolérances de fabrication resserrées, si bien que les coûts de fabrication sont élevés.

Le document WO2008026423 divulgue un organe de poussée ou de levage d'un dispositif de sécurité automobile pour apporter une protection piéton, avec un piston qui peut coulisser dans un alésage. Cependant, le montage divulgué peut présenter des mouvements parasites avant fonctionnement, ce qui peut provoquer des bruits de cliquetis. De plus, en raison de la grande taille du piston, les coûts de fabrication peuvent être conséquents pour toutefois garantir de faibles tolérances et dispersions.

Le document US2018043855A1 divulgue un actionneur à pression de gaz comprenant un logement cylindrique, une tige de piston ; la tige de piston étant logée à l'intérieur du boîtier avant d'entraîner l'actionneur à pression de gaz ; un générateur de gaz agencé sur un côté d'extrémité dans une direction axiale du logement, dans lequel, pendant l'entraînement de l'actionneur de pression de gaz, le générateur de gaz amène la tige de piston à s'étendre depuis le logement en générant un gaz à haute pression ; et un ensemble de maintien qui fixe le générateur de gaz sur le côté d'une extrémité dans la direction axiale du boîtier, l'ensemble de maintien étant pourvu d'un premier trou de coupleur pour coupler l'actionneur de pression de gaz à une première charnière à une première position sur un axe ligne de l'actionneur de pression de gaz.

US 2015183693A1 divulgue un organe de poussée pour un dispositif de protection piéton de véhicule automobile, comprenant un corps fixe, agencé pour être fixé sur le véhicule, un piston, mobile par rapport au corps fixe entre une position de repos et une position déployée, et un actionneur pyrotechnique, agencé pour faire passer le piston de la position de repos à la position déployée.

Un but de la présente invention est de répondre aux inconvénients des documents de l'art antérieur mentionnés ci-dessus et en particulier, tout d'abord, de proposer un organe de poussée qui comporte des composants simples à fabriquer, tout en offrant une garantie d'intégrité avant fonctionnement et une absence de bruit de cliquetis.

Pour cela un premier aspect de l'invention est défini dans la revendication 1, et concerne un organe de poussée pour un dispositif de protection piéton de véhicule automobile, comprenant :
- un corps fixe, agencé pour être fixé sur le véhicule,
- un piston, mobile par rapport au corps fixe entre une position de repos et une position déployée,
- un actionneur pyrotechnique, agencé pour faire passer le piston de la position de repos à la position déployée,

caractérisé en ce que le piston est serti sur le corps fixe pour être maintenu dans la position de repos, dans lequel le corps fixe comprend :
   - une interface de sertissage, agencée pour permettre un sertissage de maintien du piston dans sa position de repos,
   - une interface de butée, agencée pour former une butée de fin de course au piston pour définir la position déployée,
et dans lequel la butée de fin de course présente une dimension de passage pour le piston, supérieure à une dimension de passage de l'interface de sertissage.

Selon la mise en oeuvre ci-dessus, le piston est serti sur le corps fixe. Ainsi l'assemblage est robuste, sans risque de détachement intempestif, tout en permettant d'utiliser des composants simples à fabriquer. On entend dans la présente demande un organe comme étant une partie d'une machine, d'un dispositif, ayant une fonction déterminée, c'est-à-dire un sous ensemble de plusieurs composants qui assure la fonction de poussée ou de levage du capot dans le cas présent. Un sertissage est typiquement assuré par une déformation plastique et irréversible de matière d'une première pièce, repoussée dans une portion en creux ou en contre dépouille d'une deuxième pièce. Le piston est typiquement métallique.

En pratique, la dimension de passage mentionnée correspond à un diamètre externe ou à une dimension externe de l'interface considérée, formant alors une portion du corps fixe qui est en contact avec une surface interne du piston lorsque ce dernier est en position de repos. En conséquence, il faut un premier effort pour faire passer la portion sertie du piston au-dessus de la dimension de passage de l'interface de sertissage, et il faudrait un deuxième effort pour faire passer la portion sertie du piston au dessus de la dimension de passage de fin de course, ce qui permet de stopper de manière robuste le piston en fin de course.

Avantageusement, le piston est une pièce qui est mobile en translation, selon une liaison glissière avec le corps fixe. Dans la pratique, on peut envisager une liaison pivot glissante avec le corps fixe, et le mouvement du piston sera tout de même une translation, même si le piston pourrait tourner sur lui même. Selon un exemple de réalisation, le piston peut être une pièce femelle montée et sertie sur le corps fixe. En effet, le piston peut même former une pièce femelle externe du dispositif (qui recouvre par exemple le corps fixe lorsqu'il est en position de repos), et tout de même être appelé piston, en raison du mouvement de translation, typiquement vertical pour soulever un capot de véhicule dans une application de protection piéton.

Avantageusement, le piston serti dans la position de repos comprend au moins une portion de paroi sertie, en appui sur une portion d'appui du corps fixe et inclinée par rapport à une direction de déplacement du piston. La portion d'appui est typiquement une face d'une gorge ou d'une saillie du corps fixe, orientée transversalement par rapport à la direction de déplacement du piston. La gorge et/ou les saillies sont définies pour qu'une fois serti, le piston ne puisse pas se déplacer le long de l'axe de déplacement du piston.

Avantageusement, le piston présente une circonférence, et dans lequel le piston est serti sur toute sa circonférence ou seulement par segments. Un sertissage sur toute la circonférence permet de maximiser la retenue en fin de course. Le sertissage circonférentiel peut être obtenu par une sertisseuse à plusieurs mors ou par galetage. A l'inverse, le sertissage par segments, permet de mieux maitriser ou minimiser l'effort de sortie du piston. Si un sertissage par segments est préféré, 3 segments permettent d'assurer un bon guidage une fois le piston sorti de son logement.

Avantageusement, le corps fixe comprend au moins une gorge, et dans lequel le piston, serti dans la position de repos, comprend une portion de paroi agencée dans la gorge, à la suite d'une déformation plastique. En particulier, la déformation plastique est réalisée après l'insertion du piston sur le corps fixe.

Avantageusement, le corps fixe comprend au moins une saillie, et dans lequel le piston, serti dans la position de repos, comprend une portion de paroi agencée en appui sur la saillie, à la suite d'une déformation plastique. On entend par déformation plastique une déformation définitive de la matière. La saillie peut être une ou une série d'excroissance(s) ponctuelle(s).

Alternativement, et selon une mise en oeuvre ne faisant pas partie de l'invention revendiquée, le corps fixe comprend :
- une interface de sertissage, agencée pour permettre un sertissage de maintien du piston dans sa position de repos,
- une interface de butée, agencée pour former une butée de fin de course au piston pour définir la position déployée,
et dans lequel la butée de fin de course présente une dimension de passage pour le piston, inférieure ou égale à une dimension de passage de l'interface de sertissage. Pour garantir un bon sertissage et une cylindricité correcte du piston, la dimension extérieure de la gorge (ou des saillies) est supérieure ou égale à la dimension de la butée. Par contre, la dimension ou le diamètre du fond de l'interface de sertissage reste inférieur à la dimension ou au diamètre de la butée.

Avantageusement, le corps fixe comprend une portion amincie entre l'interface de sertissage et l'interface de butée, la portion amincie présentant une dimension de passage inférieure à la dimension de passage de l'interface de sertissage. En d'autres termes, le corps fixe présente une section plus faible entre l'interface de sertissage et l'interface de butée. De plus, une fois sorti de son logement, le piston reprendra une forme compatible avec un joint d'étanchéité logé entre le corps fixe et le piston.

Alternativement, le corps fixe comprend une portion amincie entre l'interface de sertissage et l'interface de butée, la portion amincie présentant une dimension de passage supérieure à la dimension de passage de l'interface de sertissage. Selon cette mise en oeuvre, un meilleur guidage est obtenu car une fois sorti du logement, le piston viendra prendre appui sur la surface du fait du retour élastique.

En d'autres termes, le piston comprend une portion sertie qui assure le maintien en position de repos du piston sur le corps fixe.

En conséquence, la portion sertie, une fois le piston sorti de sa position de repos, va participer au guidage du piston lors de sa course vers la position déployée. En particulier, la portion sertie reprend sa forme initiale une fois sortie de l'interface de sertissage, et procure un guidage du piston en glissant ou prenant appui sur la portion amincie.

Une fois le piston arrivé en position déployée, c'est encore la portion sertie qui va interagir avec le corps fixe, en particulier avec l'interface de butée, pour stopper la course du piston et l'arrêter en position déployée.

Autrement dit, l'invention concerne un organe de poussée pour un dispositif de protection piéton de véhicule automobile, comprenant :
- un corps fixe, agencé pour être fixé sur le véhicule,
- un piston, mobile par rapport au corps fixe entre une position de repos et une position déployée,
- un actionneur pyrotechnique, agencé pour faire passer le piston de la position de repos à la position déployée,
caractérisé en ce que le piston comprend une portion sertie qui assure le maintien en position de repos du piston sur le corps fixe, et de préférence, la portion sertie forme des moyens de guidage entre le piston et le corps fixe lors du déplacement du piston de la position de repos vers la position déployée.

Avantageusement, le corps fixe comprend une portion de positionnement, agencée entre la portion de sertissage et la portion de butée, et agencée pour guider et positionner le piston lors d'une opération de sertissage sur le corps fixe.

Avantageusement, le corps fixe comprend des moyens de retenue élastiques agencés pour s'engager avec le piston et le maintenir en position déployée. On peut par exemple prévoir une patte poussée élastiquement pour s'arc bouter contre le piston une fois ce dernier en position déployée, de sorte à empêcher tout mouvement de retour.

Avantageusement, l'actionneur pyrotechnique comprend un allumeur pyrotechnique, serti, surmoulé ou clipsé sur le corps fixe.

Avantageusement, le corps fixe comprend une embase et une rainure agencée dans l'embase pour former un passage à un élément de connexion de l'actionneur pyrotechnique.

Avantageusement, la rainure présente une profondeur adaptée pour recevoir complètement l'élément de connexion

Avantageusement, l'organe de poussée comprend un joint d'étanchéité agencé entre le piston et le corps fixe.

Avantageusement, le piston est formé par un étui. Une telle mise en oeuvre permet une conception simple du corps fixe, qui est simplement coiffé par le piston, ce dernier étant serti dans une gorge du corps fixe pour rester en position de repos de manière robuste.

Avantageusement, l'étui est une pièce emboutie.

Un second aspect de l'invention est un dispositif de protection piéton de véhicule, comprenant au moins un organe de poussée selon le premier aspect de l'invention pour former un organe de levage d'un capot.

Un dernier aspect de l'invention concerne un véhicule automobile, comprenant au moins un dispositif de protection piéton selon le deuxième aspect de l'invention.

Dans la présente demande, il est fait référence à un piston, et ce terme désigne ici une pièce qui se déplace d'une position de repos vers une position déployée. Le piston peut être une pièce ayant une géométrie cylindrique, par exemple de section circulaire, mais on peut envisager un cylindre de section non circulaire (il est entendu qu'un cylindre présente une surface dont les génératrices sont parallèles entre elles, et suivent le périmètre d'une courbe de base fermée, cette courbe de base peut être circulaire ou non). On peut envisager des formes non cylindriques. Le piston peut être une pièce qui recouvre le corps fixe, mais on peut aussi envisager que le piston soit logé dans le corps fixe.

Il est entendu que toutes les caractéristiques techniques ci-dessus peuvent être combinées entre elles ou dissociées les unes des autres tant qu'il n'y a pas d'incohérence ou incompatibilité technique

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
la figure 1 représente une vue isométrique d'un organe de poussée selon l'invention ;
la figure 2 représente une coupe de l'organe de poussée de la figure 1 ;
la figure 3 représente une vue éclatée de l'organe de poussée de la figure 1 ainsi qu'un connecteur permettant la commande de sa mise à feu.
La figure 4 représente l'organe de poussée de la figure 2, avant fonctionnement,
La figure 5 représente l'organe de poussée de la figure 2, en tout début de fonctionnement,

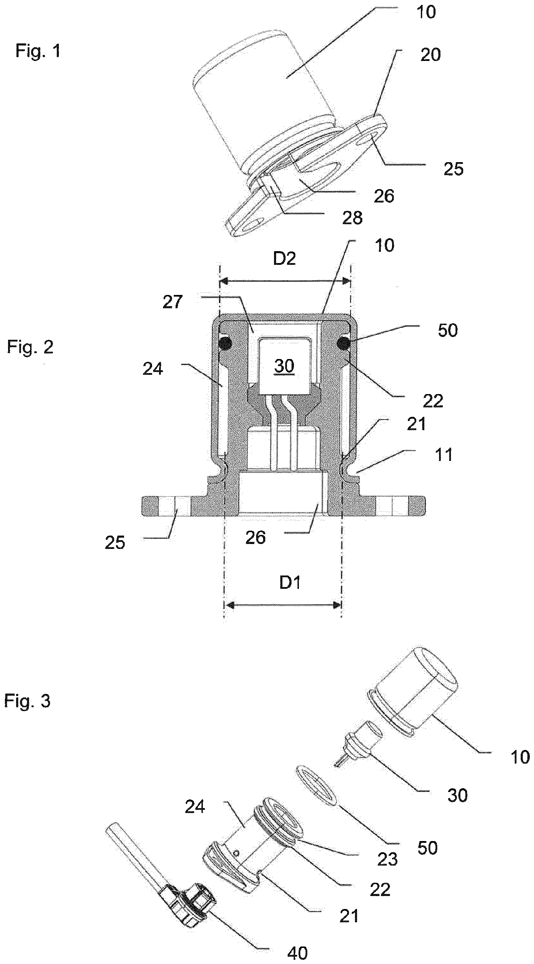

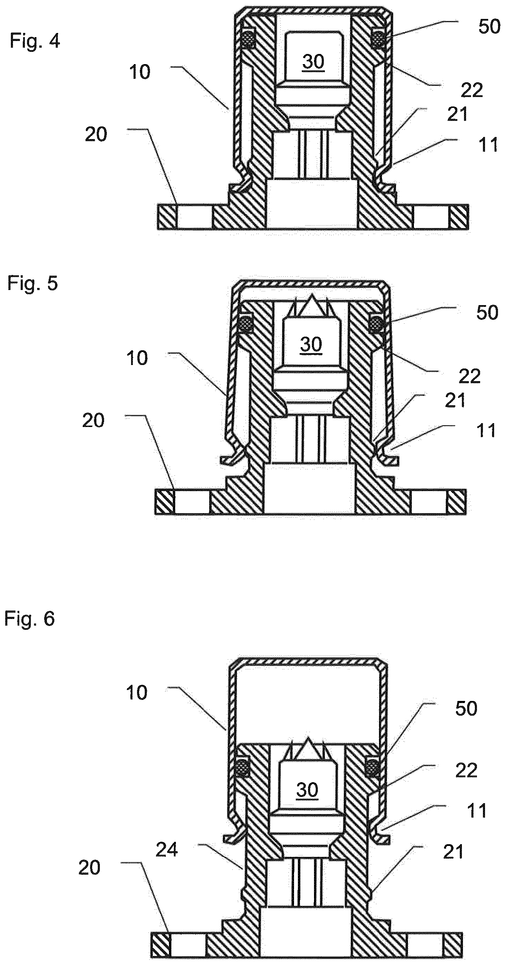

La figure 5 représente l'organe de poussée de la figure 2, en cours de fonctionnement.

La figure 1 représente une vue en perspective d'un organe de poussée selon l'invention, qui comprend un piston 10, et un corps fixe 20 agencé pour être fixé à demeure sur un véhicule automobile. A cet effet, des trous de fixation 25 sont prévus dans le corps fixe 20, pour fixer typiquement l'organe de poussée sous un capot de véhicule, pour soulever de quelques centimètres le capot, afin de permettre une déformation du capot en cas de choc avec un piéton.

Pour permettre ce déplacement, l'organe de poussée comprend un allumeur pyrotechnique 30 visible figures 2 et 3, logé dans un alésage 27 du corps fixe 20, et qui peut générer des gaz de combustion en réponse à un signal de mise à feu (typiquement un courant électrique envoyé par une carte électronique du véhicule par l'intermédiaire d'un connecteur 40 visible à la figure 3), pour pressuriser l'alésage 27, et alors pousser vers le haut le piston 10, qui a la forme générale d'un étui ou d'un capuchon.

En effet, la figure 2 représente le piston 10 dans une position de repos, mais sous l'effet des gaz de pressurisation de l'allumeur pyrotechnique 30, le piston 10 peut se déplacer vers le haut de la figure 2 pour aller occuper une position déployée.

L'allumeur pyrotechnique 30 peut être serti, maintenu par une bague montée en force ou surmoulé sur le corps fixe 20, et un joint 50 est prévu entre le piston 10 et le corps fixe 20. Avant déploiement, il est important de garantir que le piston 10 reste bien dans sa position de repos, afin de garantir par exemple qu'il ne peut pas se désolidariser du corps fixe 20 avant montage en véhicule, et/ou qu'aucun bruit de cliquetis ne sera généré de manière intempestive.

A cet effet, l'invention propose de sertir le piston 10 dans sa position de repos sur le corps fixe 20, comme le montre la figure 2.

En particulier, il est prévu une interface de sertissage avec au moins une partie en saillie 21 et une partie en creux dans laquelle une portion sertie 11 du piston 10 peut être repoussée de manière définitive (avec une déformation plastique). La portion en saillie 21 et la portion en creux du corps fixe 20 peuvent être formées une gorge de sertissage, ou bien par des protrusions ou dômes comme on peut le voir sur la figure 3.

En tout état de cause, la portion sertie 11 du piston 10 est en appui contre une paroi inclinée du corps fixe 20, si bien que la position de repos est assurée de manière robuste.

L'invention propose également d'implanter une portion de fin de course 22 sur le corps fixe 20, sur laquelle le piston 10 (en particulier la portion sertie 11) va entrer en butée, pour définir la position déployée. Dans le détail, la partie en saillie 21 présente un diamètre extérieur D1 qui définit une première dimension de passage, et l'interface de fin de course 22 présente un diamètre extérieur D2 qui définit une deuxième dimension de passage, et selon l'invention, D2 est supérieur à D1, ce qui permet de garantir un arrêt en position. Cependant, et selon une mise en oeuvre ne faisant pas partie de l'invention revendiquée, on peut prévoir D1 supérieur ou égal à D2, pour garantir un bon sertissage.

L'arrêt en butée du piston 10 est garanti par le fait que la portion sertie 11 doit se déformer d'une certaine valeur pour « passer au dessus » de la partie en saillie 21, mais devrait se déformer plus pour faire de même avec l'interface de fin de course 22. Comme le volume alors offert aux gaz de l'allumeur pyrotechnique a augmenté, la force de poussée exercée sur le piston 10 en position déployée est plus faible qu'en position de repos, ce qui garantit que la partie sertie 11 (un peu déformée après avoir dépassé la partie en saillie 21) ne se déformera pas pour dépasser l'interface de fin de course 22 (car la force est inférieure, et la déformation doit être plus importante).

Afin de ne pas gêner ni entraver le mouvement du piston 10 entre sa position de repos et sa position déployée, on peut prévoir une portion amincie 24, agencée entre l'interface de sertissage et l'interface de fin de course 22, afin de garantir des frottements minimum et un bon guidage entre le piston 10 et le corps fixe 20 lors du déploiement. En d'autres termes, le corps fixe 20, présente au niveau de la portion amincie un diamètre inférieur au diamètre D1. Cependant, on peut prévoir un diamètre de la portion amincie 24 au moins égal à celui de la portion de corps fixe qui contacte la portion sertie 11 du piston 10 en position de repos, c'est-à-dire par exemple le diamètre de fond de gorge, pour guider le piston 10 lors de son déplacement.

Le corps fixe comprend également un alésage de connexion 26, agencé pour recevoir un connecteur 40 visible figure 3. Avantageusement, le corps fixe 20 comprend une rainure 28 (visible figure 1) dimensionnée pour accueillir complètement le connecteur 40, si bien que le connecteur ne dépasse pas. Ainsi, une fixation du corps fixe 20 sur une face plane du véhicule est possible et la longueur du piston est maximisée.

La figure 4 représente l'organe de poussée avant fonctionnement, avec le piston 10 en position de repos, c'est-à-dire avec la portion sertie 11 engagée avec la partie en saillie 21 (l'interface de sertissage).

La figure 5 représente l'organe de poussée en tout début de fonctionnement, avec le piston 10 qui sort juste de sa position de repos, c'est-à-dire avec la portion sertie 11 en regard de la partie en saillie 21 (l'interface de sertissage). L'allumeur 30 vient de fonctionner, a désoperculé et a généré des gaz qui poussent le piston 30 vers le haut de la figure 5. En conséquence, et comme montré figure 5, la portion sertie 11 passe au dessus de la partie en saillie 21 par déformation élastique du piston 10.

La figure 6 représente l'organe de poussée en cours de fonctionnement, avec le piston 10 qui coulisse le long du corps fixe 20, de sa position de repos vers la position déployée. En particulier, on peut remarquer que la portion sertie 11 coulisse le long de la partie amincie 24 pour guider le piston 10. En effet, en raison du retour élastique du piston 10 (par rapport à la figure 5), la portion sertie 11 est ajustée à la portion amincie 24 et participe au guidage du piston 10.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence à un organe de poussée pour un dispositif de protection piéton, mais on peut envisager d'utiliser l'invention pour un organe de poussé d'un rétracteur de ceinture de sécurité, ou pour un organe de poussée d'un coupe circuit électrique.

## Revendications

1. Organe de poussée pour un dispositif de protection piéton de véhicule automobile, comprenant :
- un corps fixe (20), agencé pour être fixé sur le véhicule,
- un piston (10), mobile par rapport au corps fixe (20) entre une position de repos et une position déployée,
- un actionneur pyrotechnique, agencé pour faire passer le piston (10) de la position de repos à la position déployée,
**caractérisé en ce que** le piston (10) est serti sur le corps fixe (20) pour être maintenu dans la position de repos,
dans lequel le corps fixe (20) comprend :
- une interface de sertissage (11, 21), agencée pour permettre un sertissage de maintien du piston (10) dans sa position de repos,
- une interface de butée, agencée pour former une butée de fin de course (22) au piston (10) pour définir la position déployée,
et dans lequel la butée de fin de course (22) présente une dimension de passage (D2) pour le piston (10), supérieure à une dimension (D1) de passage de l'interface de sertissage.

2. Organe de poussée selon la revendication précédente, dans lequel le piston (10) serti dans la position de repos comprend au moins une portion de paroi sertie (11), en appui sur une portion d'appui du corps fixe (20) et inclinée par rapport à une direction de déplacement du piston (10).

3. Organe de poussée selon l'une des revendications précédentes, dans lequel le piston (10) présente une circonférence, et dans lequel le piston (10) est serti sur toute sa circonférence ou seulement par segments.

4. Organe de poussée selon l'une des revendications précédentes, dans lequel le corps fixe (20) comprend au moins une gorge, et dans lequel le piston (10), serti dans la position de repos, comprend une portion de paroi agencée dans la gorge, à la suite d'une déformation plastique.

5. Organe de poussée selon l'une des revendications précédentes, dans lequel le corps fixe (20) comprend au moins une saillie (21), et dans lequel le piston (10), serti dans la position de repos, comprend une portion de paroi agencée en appui sur la saillie (21), à la suite d'une déformation plastique.

6. Organe de poussée selon l'une des revendications précédentes, dans lequel le corps fixe (20) comprend une portion amincie entre l'interface de sertissage et l'interface de butée, la portion amincie présentant une dimension de passage inférieure à la dimension de passage de l'interface de sertissage.

7. Organe de poussée selon l'une des revendications précédentes, dans lequel le corps fixe (20) comprend une portion amincie entre l'interface de sertissage et l'interface de butée, la portion amincie présentant une dimension de passage supérieure à la dimension de passage de l'interface de sertissage.

8. Organe de poussée selon l'une des revendications précédentes, dans lequel le corps fixe (20) comprend des moyens de retenue élastiques agencés pour s'engager avec le piston (10) et le maintenir en position déployée.

9. Organe de poussée selon l'une des revendications précédentes, dans lequel l'actionneur pyrotechnique comprend un allumeur pyrotechnique (30), serti, surmoulé ou clipsé sur le corps fixe.

10. Organe de poussée selon l'une des revendications précédentes, dans lequel le corps fixe (20) comprend une embase et une rainure agencée dans l'embase pour former un passage à un élément de connexion de l'actionneur pyrotechnique.

11. Organe de poussée selon l'une des revendications précédentes, dans lequel le piston (10) est formé par un étui.

12. Dispositif de protection piéton de véhicule, comprenant au moins un organe de poussée selon l'une des revendications précédentes pour former un organe de levage d'un capot

13. Véhicule automobile, comprenant au moins un dispositif de protection piéton selon la revendication précédente.

## Patentansprüche

1. Schuborgan für eine Fußgängerschutzvorrichtung eines Kraftfahrzeugs, umfassend:
- einen festen Körper (20), der angeordnet ist, um an dem Fahrzeug befestigt zu werden,
- einen Kolben (10), der in Bezug auf den festen Körper (20) zwischen einer Ruhestellung und einer ausgefahrenen Stellung bewegbar ist,
- einen pyrotechnischen Aktuator, der angeordnet ist, um den Kolben (10) von der Ruhestellung in die ausgefahrene Stellung passieren zu lassen,
**dadurch gekennzeichnet, dass** der Kolben (10) auf den festen Körper (20) gefalzt ist, um in der Ruheposition gehalten zu werden, wobei der feste Körper (20) umfasst:
- eine Falzverbindungsstelle (11, 21), die angeordnet ist, um ein Falzen zum Halten des Kolbens (10) in seiner Ruheposition zu ermöglichen,
- eine Anschlagverbindungsstelle, die angeordnet ist, um einen Endanschlag (22) für den Kolben (10) auszubilden, um die ausgefahrene Position zu definieren, und wobei der Endanschlag (22) eine Durchgangsabmessung (D2) für den Kolben (10), die größer als eine Durchgangsabmessung (D1) der Falzverbindungsstelle ist, aufweist.

2. Schuborgan nach dem vorstehenden Anspruch, wobei der in der Ruhestellung gefalzte Kolben (10) mindestens einen gefalzten Wandabschnitt (11), der an einem Anlageabschnitt des festen Körpers (20) anliegt und in Bezug auf eine Bewegungsrichtung des Kolbens (10) geneigt ist, umfasst.

3. Schuborgan nach einem der vorstehenden Ansprüche, wobei der Kolben (10) einen Umfang aufweist, und wobei der Kolben (10) über seinen gesamten Umfang oder nur in Segmenten gefalzt ist.

4. Schuborgan nach einem der vorstehenden Ansprüche, wobei der feste Körper (20) mindestens eine Nut aufweist, und wobei der in der Ruhestellung gefalzte Kolben (10) infolge einer plastischen Verformung einen in der Nut angeordneten Wandabschnitt aufweist.

5. Schuborgan nach einem der vorstehenden Ansprüche, wobei der feste Körper (20) mindestens einen Vorsprung (21) umfasst und wobei der in der Ruhestellung gefalzte Kolben (10) einen Wandabschnitt, der infolge einer plastischen Verformung in Anlage an dem Vorsprung (21) angeordnet ist, umfasst.

6. Schuborgan nach einem der vorstehenden Ansprüche, wobei der feste Körper (20) einen verjüngten Abschnitt zwischen der Falzverbindungsstelle und der Anschlagverbindungsstelle umfasst, wobei der verjüngte Abschnitt eine Durchgangsgröße, die kleiner als die Durchgangsgröße der Falzverbindungsstelle ist, aufweist.

7. Schuborgan nach einem der vorstehenden Ansprüche, wobei der feste Körper (20) einen verjüngten Abschnitt zwischen der Falzverbindungsstelle und der Anschlagverbindungsstelle umfasst, wobei der verjüngte Abschnitt eine Durchgangsgröße, die größer als die Durchgangsgröße der Falzverbindungsstelle ist, aufweist.

8. Schuborgan nach einem der vorstehenden Ansprüche, wobei der feste Körper (20) elastische Haltemittel, die angeordnet sind, um mit dem Kolben (10) in Eingriff zu kommen und ihn in der ausgefahrenen Position zu halten, umfasst.

9. Schuborgan nach einem der vorstehenden Ansprüche, wobei der pyrotechnische Aktuator einen pyrotechnischen Zünder (30), der auf den festen Körper gefalzt, überformgepresst oder aufgeklipst ist, umfasst.

10. Schuborgan nach einem der vorstehenden Ansprüche, wobei der feste Körper (20) ein Unterteil und eine Kerbe, die in dem Unterteil angeordnet ist, um einen Durchgang zu einem Verbindungselement des pyrotechnischen Aktuators auszubilden, umfasst.

11. Schuborgan nach einem der vorstehenden Ansprüche, wobei der Kolben (10) durch eine Hülle ausgebildet wird.

12. Fußgängerschutzvorrichtung eines Fahrzeugs, umfassend mindestens ein Schuborgan nach einem der vorstehenden Ansprüche, um ein Hebeorgan für eine Motorhaube auszubilden.

13. Kraftfahrzeug, umfassend mindestens eine Fußgängerschutzvorrichtung nach dem vorstehenden Anspruch.

## Claims

1. Thrust member for a pedestrian protection device for a motor vehicle, comprising:
- a fixed body (20), which is arranged to be fixed to the vehicle,
- a piston (10), which is movable relative to the fixed body (20) between a rest position and a deployed position,
- a pyrotechnic actuator, which is arranged to cause the piston (10) to move from the rest position to the deployed position,
**characterized in that** the piston (10) is crimped to the fixed body (20) in order to be held in the rest position, wherein the fixed body (20) comprises:
- a crimping interface (11, 21), which is arranged to allow crimping in order to hold the piston (10) in its rest position,
- a stop interface, which is arranged to form an end-of-travel stop (22) for the piston (10) to define the deployed position, and wherein the end-of-travel stop (22) has a passage dimension (D2) for the piston (10) which is greater than a passage dimension (D1) of the crimping interface.

2. Thrust member according to the preceding claim, wherein the piston (10) crimped in the rest position comprises at least one crimped wall portion (11) bearing upon a bearing portion of the fixed body (20) and inclined relative to a direction of movement of the piston (10).

3. Thrust member according to one of the preceding claims, wherein the piston (10) has a circumference, and wherein the piston (10) is crimped over its entire circumference or only in segments.

4. Thrust member according to one of the preceding claims, wherein the fixed body (20) comprises at least one groove, and wherein the piston (10), crimped in the rest position, comprises a wall portion arranged in the groove, following a plastic deformation.

5. Thrust member according to one of the preceding claims, wherein the fixed body (20) comprises at least one projection (21), and wherein the piston (10), crimped in the rest position, comprises a wall portion arranged to bear upon the projection (21), following a plastic deformation.

6. Thrust member according to one of the preceding claims, wherein the fixed body (20) comprises a thinned portion between the crimping interface and the stop interface, the thinned portion having a passage dimension which is less than the passage dimension of the crimping interface.

7. Thrust member according to one of the preceding claims, wherein the fixed body (20) comprises a thinned portion between the crimping interface and the stop interface, the thinned portion having a passage dimension which is greater than the passage dimension of the crimping interface.

8. Thrust member according to one of the preceding claims, wherein the fixed body (20) comprises resilient retaining means arranged to engage with the piston (10) and hold it in the deployed position.

9. Thrust member according to one of the preceding claims, wherein the pyrotechnic actuator comprises a pyrotechnic igniter (30) which is crimped, overmolded or clipped onto the fixed body.

10. Thrust member according to one of the preceding claims, wherein the fixed body (20) comprises a base and a groove arranged in the base to form a passage for a connecting element of the pyrotechnic actuator.

11. Thrust member according to one of the preceding claims, wherein the piston (10) is formed by a case.

12. Pedestrian protection device for a vehicle, comprising at least one thrust member according to one of the preceding claims in order to form a hood-lifting member.

13. Motor vehicle comprising at least one pedestrian protection device according to the preceding claim.
